# EUROPÄISCHE PATENTSCHRIFT

(11) **EP 1 986 316 B1**
(45) Veröffentlichungstag und Bekanntmachung des Hinweises auf die Patenterteilung: **17.11.2010**
(21) Anmeldenummer: 07008552.7
(22) Anmeldetag: 26.04.2007
(51) Int. Cl.: H02P 1/26, H02P 1/28, H02P 1/40, H02P 3/18

(54) **Entlastung des Bypasssystems von Sanftanlaufgeräten von Überströmen**
Relief of bypass-system of soft-starters from over-currents
Délestement de surintensités à l'aide d'un système de dérivation pour un démarreur doux

(43) Veröffentlichungstag der Anmeldung: 29.10.2008
(73) Patentinhaber: SIEMENS AKTIENGESELLSCHAFT, 80333 München (DE)
(72) Erfinder: Hertz, Dirk, 92260 Fichtenhof (DE); Reichenbach, Norbert, 92224 Amberg (DE); Seitz, Johann, 92224 Amberg (DE); Zitzler, Stefan, 92421 Schwandorf (DE)

(56) Entgegenhaltungen:
- EP-A2- 1 037 372
- WO-A-01/89074
- DE-A1- 10 003 692

## Beschreibung

Die Erfindung betrifft ein Sanftstartgerät zur Ansteuerung eines Motors mit einem Halbleiterleistungsteil für den Motoranlauf und -auslauf, mit einem Bypasssystem zur Überbrückung des Halbleiterleistungsteils sowie mit einer Steuerung zur Ansteuerung des Halbleiterleistungsteils und des Bypasssystems.

Die Erfindung betrifft ferner ein Verfahren zur Ansteuerung eines Motors mittels eines Sanftstartgerätes mit einem Halbleiterleistungsteil für den Motoranlauf und -auslauf, mit einem Bypasssystem zur Überbrückung des Halbleiterleistungsteils sowie mit einer Steuerung zur Ansteuerung des Halbleiterleistungsteils und des Bypasssystems.

Ein derartiges Sanftstartgerät beziehungsweise Verfahren kommt in motorischen Antrieben zum Einsatz, in denen heute vorzugsweise Drehstromasynchronmotoren eingesetzt werden, für deren Steuerung häufig Sanftstartgerätes verwendet werden.

Sanftstartgeräte, zum Beispiel wie die in der WO 01/89074 A2 oder in der DE 100 03 692 A1 offenbarten, bestehen aus einem Halbleiterleistungsteil für den Motoranlauf und -auslauf und verfügen häufig über ein integriertes Bypasssystem. Mit diesem Bypasssystem wird im Dauerbetrieb das Halbleiterleistungsteil zur Reduzierung der Dauerverluste überbrückt. Das Bypasssystem ist so konstruiert, dass es die im Dauerbetrieb auftretenden Ströme führen kann. Eine Steuerung übernimmt die Ansteuerung des Halbleiterleistungsteils und des Bypasssystems.

Sowohl beim Motoranlauf und -auslauf als auch im Dauerbetrieb treten betriebsmäßig Überströme auf, die ein Mehrfaches des Motornennstromes betragen können. In der Regel sind beim Motoranlauf und -auslauf die betriebsmäßigen Überströme höher und von längerer Dauer als die im Dauerbetrieb. Bei Anwendungen wie Brecher, Mühlen oder Pressen kommt es aber im Dauerbetrieb zu Laststößen, die Überströme zur Folge haben können, die ähnlich hoch und auch höher sein können als die beim Motoranlauf und -auslauf. Während aber im Motoranlauf und - auslauf die Überströme durch geeignetes Ansteuern der Leistungshalbleiter des Halbleiterleistungsteils auf einen für die elektrische Anlage verträglichen Wert begrenzt werden können, besteht diese Möglichkeit im Dauerbetrieb mit dem Bypasssystem nicht.

Die größte Belastung durch Überströme tritt in Fehlerfällen wie z.B. bei Motorblockierungen auf. Hier erfolgt eine Abschaltung durch übergeordnete Schutzorgane (Motorschutz). Die Zeitdauer bis zum Abschalten kann je nach Höhe der Überlast zwischen einigen Sekunden (bei 6-8 facher Überlast) bis zu einigen Minuten (bei 1,5-2 facher Überlast) betragen. Da diese Fehlerfälle auch im Dauerbetrieb bei eingeschaltetem Bypasssystem auftreten können, muss das Bypasssystem für diese hohe Überstrombeanspruchung thermisch und mechanisch ausgelegt sein. Durch entsprechend große Querschnitte der stromführenden Teile des Bypasssystems wird sichergestellt, dass diese nicht unzulässig hohe Temperaturen erreichen. Die mechanische Beanspruchung entsteht durch die durch den elektrischen Strom verursachten Kräfte, die zu einem ungewollten Öffnen der Schaltkontakte des Bypasssystems führen können mit der Folge eines Lichtbogens, dessen Wärmeentwicklung zum Verschweißen der Kontakte führen kann. Das ungewollte Öffnen wird verhindert durch ausreichende Bemessung der Vorrichtung, welche die Kraft aufbringt, mit der die Schaltkontakte aufeinander gedrückt werden. Diese Kraftvorrichtung wird sehr häufig durch ein Magnetsystem gebildet, bestehend aus weichmagnetischen Blechen und einer stromdurchflossenen Wicklung. Da die auf die Schaltkontakte wirkenden Kräfte proportional dem Stromquadrat sind, kann ein ungewolltes Öffnen bei großen Überströmen nur durch entsprechend große Dimensionierung der Kraftvorrichtung vermieden werden.

Somit stellen sich folgende Probleme: Bei Fehlerfällen im Dauerbetrieb muss mit einer hohen Überstrombeanspruchung des Bypasssystems gerechnet werden. Dieses muss für diese hohe Überstrombeanspruchung thermisch und mechanisch dimensioniert werden.

Im betriebsmäßigen Dauerbetrieb mit dem Bypasssystem können Überströme nicht begrenzt werden und Werte und Zeitdauern erreichen, die nachteilig für die elektrische Anlage sind, da diese Überströme unter anderem hohe Netzspannungseinbrüche verursachen.

Für das Bypasssystem wurde das Problem bisher dadurch gelöst, dass es für die betriebsmäßig und im Fehlerfall auftretenden Überströme thermisch und mechanisch bemessen wurde. Eine weitere Lösungsmöglichkeit besteht darin, ein thermisches Schutzmodell für das Bypasssystem vorzusehen, welches im Überlastfall bei Überschreitung eines vorgegebenen Übertemperaturschwellwertes das Bypasssystem abschaltet.

Für das Problem, dass bei Dauerbetrieb im Bypassmodus die betriebsmäßigen Überströme nicht begrenzt werden können, gibt es keine bekannte Lösung.

In der älteren Anmeldung DE 10 2006 041 864.6 ist eine Lösung zum energiesparenden Dauerbetrieb eines Motors beschrieben, bei welcher im Dauerbetrieb vom Bypasssystem auf das Halbleiterleistungsteil umgeschaltet wird, um mit einem geeigneten Steuerverfahren den Motorstrom zu reduzieren. Hierbei wird jedoch der Motorstrom auf einen Wert reduziert, der kleiner ist als der Motornennstrom, um bei mit Teillast betriebenen Motoren die elektrischen Motorverluste zu verringern.

Der Erfindung liegt die Aufgabe zugrunde, das Bypasssystem eines Sanftstartgerätes von Überströmen zu entlasten.

Diese Aufgabe wird bei einem Sanftstartgerät der eingangs genannten Art dadurch gelöst,
- dass das Sanftstartgerät einen Sensor zur Strommessung aufweist,
- dass der Steuerung ein erster Schwellwert vorgebbar ist,
- dass der Steuerung ein vom Sensor gemessener Stromwert zuführbar ist,
- dass die Steuerung zur Abschaltung des bereits eingeschalteten Bypasssystems und zur Einschaltung des Halbleiterleistungsteils vorgesehen ist, wenn der Stromwert im Dauerbetrieb des Motors den ersten Schwellwert übersteigt, und
- dass die Steuerung zur Wiedereinschaltung des Bypasssystems und zur Ausschaltung des Halbleiterleistungsteils vorgesehen ist, wenn der Stromwert unter den ersten Schwellwert fällt.

Die Aufgabe wird ferner durch ein Verfahren mit den in Anspruch 4 angegebenen Merkmalen gelöst.

Dadurch, dass in der Dauerbetriebsphase, wenn das Bypasssystem eingeschaltet ist, der durch das Bypasssystem fließende Strom gemessen und von der Steuerung mit einem vorgegebenen Stromschwellwert verglichen wird, wird bei Überschreiten dieses Schwellwertes das Halbleiterleistungsteil ein- und das Bypasssystem ausgeschaltet, so dass der Strom auf das Halbleiterleistungsteil wechselt. Unterschreitet der Strom durch das Halbleiterleistungsteil den vorgegebenen Schwellwert, wird das Bypasssystem wieder ein- und das Halbleiterleistungsteil ausgeschaltet.

Der Stromschwellwert, bei welchem die Umschaltung zwischen Bypasssystem und Halbleiterleistungsteil erfolgt, kann thermisch bedingt sein und z.B. den zweifachen thermischen Dauergrenzstromwert des Bypasssystems haben. Ebenso denkbar ist es, als Stromschwellwert einen Stromwert zu wählen, bei welchem die geschlossenen Schaltstücke infolge der Stromkräfte gerade noch nicht öffnen.

In Anwendungen wie Brecher, Mühlen oder Pressen sind die Antriebe die vorwiegende Zeit in der Dauerbetriebsphase. Motoran- und -ausläufe sind relativ selten, so dass das thermische Leistungsvermögen des Halbleiterleistungsteils kaum genutzt wird. Durch die Übernahme von Überströmen in der Dauerbetriebsphase kann das nicht genutzte thermische Leistungsvermögen vorteilhaft eingesetzt werden. Zudem muss das Bypasssystem nur für eine geringe Überstrombelastung dimensioniert werden, so dass das Bypasssystem und damit auch das Sanftstartgerät kleiner und kostengünstiger dimensioniert werden kann.

In einer vorteilhaften Form der Ausgestaltung ist der Steuerung ein zweiter Schwellwert vorgebbar und ist die Steuerung bei Einschaltung des Halbleiterleistungsteils derart zur Ansteuerung des Halbleiterleistungsteils vorgesehen, dass eine Begrenzung des Stroms auf den zweiten Schwellwert stattfindet. Das heißt der durch das Halbleiterleistungsteil fließende Strom kann nun mit entsprechenden Steuerverfahren, z.B. einer Phasenanschnittsteuerung, auf einen vorgegebenen Stromwert - den zweiten Schwellwert - begrenzt werden, so dass negative Auswirkungen auf die elektrische Anlage infolge zu hoher Überströme, wie z.B. Netzspannungseinbrüche, vermieden oder erheblich reduziert werden. Durch die Begrenzung der Überströme kann ebenfalls das nicht genutzte thermische Leistungsvermögen des Halbleiterleistungsteils vorteilhaft eingesetzt werden.

In einer weiteren vorteilhaften Ausführungsform weist die Steuerung eine Hysterese zur Ein- beziehungsweise Ausschaltung von Bypasssystem und Halbleiterleistungsteil auf. Hierdurch wird für den Fall, dass der Stromwert sich im Bereich des Stromschwellwertes befindet, ein schnelles Hin- und Herschalten zwischen Bypasssystem und Halbleiterleistungsteil vermieden.

Im Folgenden wird die Erfindung anhand der in den Figuren dargestellten Ausführungsbeispiele näher beschrieben und erläutert. Es zeigen:
- FIG 1: einen Blockschaltbild eines erfindungsgemäßen Sanftstartgerätes,
- FIG 2: ein Flussdiagramm zur Veranschaulichung des erfindungsgemäßen Verfahrens.

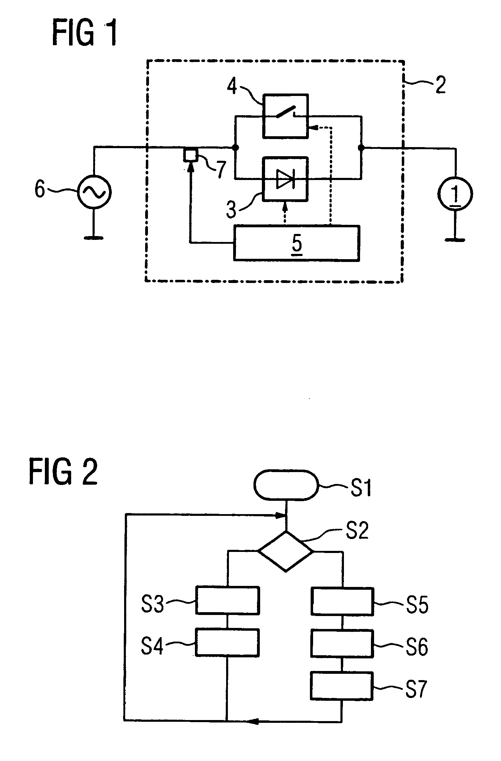

Fig 1 zeigt ein Blockschaltbild eines Sanftstartgerätes 2, das einen Motor 1, z.B. einen Drehstromasynchronmotor, aufweist. Der Motor 1 wird im gezeigten Ausführungsbeispiel mithilfe einer Wechselstromquelle 6 betrieben und ist mit dieser direkt über ein Bypasssystem 4, dass z.B. als Schalter ausgebildet ist, verbindbar oder über ein Halbleiterleistungsteil 3, das den Wechselstrom aus der Wechselstromquelle 6 z.B. durch eine Phasenanschnittsteuerung modifizieren kann, um eine Teilleistung an einen Motor 1 anzulegen. Eine Steuereinheit 5 ist mit dem Bypasssystem 4 verbunden, um dieses zu schalten, so dass das Halbleiterleistungsteil 3 überbrückt wird oder nicht. Weiterhin ist die Steuerung 5 mit einem Sensor 7 verbunden, der einen Strom in den Motor 1 misst.

Das Halbleiterleistungsteil 3 ist hauptsächlich für einen sanften Motoran- und -auslauf zuständig, während im Dauerbetrieb zur Vermeidung der Dauerverluste auf das Bypasssystem 4 umgeschaltet wird. Treten nun im Dauerbetrieb, das heißt bei aktiviertem Bypasssystem 4, Überströme auf, so wird dies von der Steuerung 5 mittels des Sensors 7 registriert und vom Bypasssystem 4 auf das Halbleiterleistungsteil 3 umgeschaltet, wenn der gemessene Stromwert einen vorgebbaren Stromschwellwert überschreitet. Sinkt der gemessene Stromwert wieder unter den vorgebbaren Schwellwert, so schaltet die Steuerung 5 wieder vom Halbleiterleistungsteil 3 auf das Bypasssystem 4 zurück. Auf diese Weise wird das Bypasssystem 4 von zu hohen Überströmen entlastet, das heißt von solchen, deren Wert den ersten Schwellwert überschreitet. Somit muss das Bypasssystem 4 nur für eine geringe Überstrombelastung dimensioniert werden und kann dadurch - wie auch das Sanftstartgerät 2 insgesamt - kleiner und kostengünstiger dimensioniert werden.

In Figur 2 ist ein Flussdiagramm zur Verdeutlichung des Verfahrens zur Ansteuerung eines Motors 1 gemäß der Erfindung dargestellt. Nach dem Einschalten des Sanftstartgerätes 2 beziehungsweise nach dem Signalisieren, dass der Motor 1 anlaufen soll, wird der Motor 1 gemäß einem Sanftanlaufprogramm mit ansteigender Leistung angesteuert, so dass der Motor 1 ohne Rucken anläuft (Schritt S1). Anschließend, das heißt nach Beenden der Einschaltphase, wird in einem Schritt S2 überprüft, ob der mittels des Sensors 7 gemessene Strom durch das Bypasssystem 4 größer ist als der vorgegebene erste Schwellwert. Ist der gemessene Strom nicht größer als der erste Schwellwert, so bleibt das Bypasssystem 4 eingeschaltet oder wird von der Steuerung 5 eingeschaltet, je nach seinem vorherigen Zustand (Schritt S3), und das Halbleiterleistungsteil 3 ausgeschaltet (Schritt S4).

Übersteigt der gemessene Strom den ersten Schwellwert, so schaltet die Steuerung 5 das Halbleiterleistungsteil 3 ein (Schritt S5) und das Bypasssystem 4 aus (Schritt S7). In dem dazwischenliegenden Schritt S6 sorgt die Steuerung 5 für eine geeignete Ansteuerung des Halbleiterleistungsteils 3, die z.B. eine Strombegrenzung auf einen zweiten Schwellwert mittels einer Phasenanschnittsteuerung bewirkt. Nach den Schritten S4 beziehungsweise S7 beginnt das Verfahren wieder bei Schritt S2, d.h. es findet eine beständige Überprüfung auf das Auftreten von Überströmen statt. Vorteilhafterweise weist dabei die Steuerung 5 eine Hysterese für das Ein- und Ausschalten von Bypasssystem 4 und Halbleiterleistungsteil 3 auf, so dass ein "Flattern" vermieden wird, wenn sich der Stromwert in der Nähe des ersten Schwellwertes befindet.

Zusammenfassend betrifft die Erfindung ein Sanftstartgerät zur Ansteuerung eines Motors mit einem Halbleiterleistungsteil für den Motoranlauf und -auslauf, mit einem Bypasssystem zur Überbrückung des Halbleiterleistungsteils sowie mit einer Steuerung zur Ansteuerung des Halbleiterleistungsteils und des Bypasssystems. Um das Sanftstartgerät von Überströmen zu entlasten, wird vorgeschlagen,
- dass das Sanftstartgerät einen Sensor zur Strommessung aufweist,
- dass der Steuerung ein erster Schwellwert vorgebbar ist,
- dass der Steuerung ein vom Sensor gemessener Stromwert zuführbar ist,
- dass die Steuerung zur Abschaltung des bereits eingeschalteten Bypasssystems und zur Einschaltung des Halbleiterleistungsteils vorgesehen ist, wenn der Stromwert im Daeuerbetrieb des Motors den ersten Schwellwert übersteigt, und
- dass die Steuerung zur Wiedereinschaltung des Bypasssystems und zur Ausschaltung des Halbleiterleistungsteils vorgesehen ist, wenn der Stromwert unter den ersten Schwellwert fällt.

## Patentansprüche

1. Sanftstartgerät (2) zur Ansteuerung eines Motors (1) mit einem Halbleiterleistungsteil (3) für den Motoranlauf und -auslauf, mit einem Bypasssystem (4) zur Überbrückung des Halbleiterleistungsteils (3) sowie mit einer Steuerung (5) zur Ansteuerung des Halbleiterleistungsteils (3) und des Bypass-Systems (4), wobei
- das Sanftstartgerät (2) einen Sensor (7) zur Strommessung aufweist,
- der Steuerung (5) ein erster Schwellwert vorgebbar ist,
- der Steuerung (5) ein vom Sensor (7) gemessener Stromwert zuführbar ist, **dadurch gekennzeichnet,**
- **dass** die Steuerung (5) derart ausgebildet ist, das bereits eingeschaltete Bypass-System (4) abzuschalten und das Halbleiterleistungsteil (3) einzuschalten, wenn der Stromwert im Dauerbetrieb des Motors (1) den ersten Schwellwert übersteigt, und
- **dass** die Steuerung (5) derart ausgebildet ist, das Bypass-System (4) wieder einzuschalten und das Halbleiterleistungsteil (3) auszuschalten, wenn der Stromwert unter den ersten Schwellwert fällt.

2. Sanftstartgerät nach Anspruch 1,
wobei der Steuerung (5) ein zweiter Schwellwert vorgebbar ist und wobei die Steuerung (5) bei Einschaltung des Halbleiterleistungsteils (3) derart zur Ansteuerung des Halbleiterleistungsteils (3) vorgesehen ist, dass eine Begrenzung des Stroms auf den zweiten Schwellwert stattfindet.

3. Sanftstartgerät nach Anspruch 1 oder 2,
wobei die Steuerung (5) eine Hysterese zur Ein- bzw. Ausschaltung von Bypasssystem (4) und Halbleiterleistungsteil (3) aufweist.

4. Verfahren zur Ansteuerung eines Motors (1) mittels eines Sanftstartgerätes (2) mit einem Halbleiterleistungsteil (3) für den Motoranlauf und -auslauf, mit einem Bypasssystem (4) zur Überbrückung des Halbleiterleistungsteils (3) sowie mit einer Steuerung (5) zur Ansteuerung des Halbleiterleistungsteils (3) und des Bypasssystems (4), wobei
- bei eingeschaltetem Bypasssystem (4) der durch das Bypasssystem (4) fließende Strom gemessen wird, und
- der Steuerung (5) ein erster Schwellwert vorgegeben wird, mit dem der gemessene Strom verglichen wird,
**dadurch gekennzeichnet,**
- **dass** das bereits eingeschaltete Bypasssystem (4) ab- und das Halbleiterleistungsteil (3) im Dauerbetrieb des Motors (1) eingeschaltet wird, wenn der Strom den ersten Schwellwert übersteigt, und
- **dass** das Bypasssystem (4) wieder ein- und das Halbleiterleistungsteil (3) ausgeschaltet wird, wenn der Strom unter den ersten Schwellwert fällt.

5. Verfahren nach Anspruch 4,
wobei ein zweiter Schwellwert vorgegeben wird und wobei bei eingeschaltetem Halbleiterleistungsteil (3) dieses derart angesteuert wird, dass der Strom auf den zweiten Schwellwert begrenzt wird.

6. Verfahren nach Anspruch 4 oder 5,
wobei die Steuerung (5) mit einer Hysterese zur Ein- bzw. Ausschaltung von Bypasssystem (4) und Halbleiterleistungsteil (3) versehen wird.

## Claims

1. Soft starter (2) for driving a motor (1) having a semiconductor power section (3) for starting up and running down a motor, having a bypass system (4) for bridging the semiconductor power section (3) and also having a control means (5) for driving the semiconductor power section (3) and the bypass system (4),
- the soft starter (2) having a sensor (7) for measuring current,
- it being possible for a first threshold value to be prespecified to the control means (5),
- it being possible for a current value which is measured by the sensor (7) to be supplied to the control means (5), **characterized**
- **in that** the control means (5) is designed so as to switch off the bypass system (4) which is already switched on and to switch on the semiconductor power section (3) if the current value exceeds the first threshold value during long-term operation of the motor (1), and
- **in that** the control means (5) is designed to switch on the bypass system (4) again and switch off the semiconductor power section (3) if the current value falls below the first threshold value.

2. Soft starter according to Claim 1,
it being possible for a second threshold value to be prespecified to the control means (5), and, when the semiconductor power section (3) is switched on, the control means (5) being intended to drive the semiconductor power section (3) so as to limit the current to the second threshold value.

3. Soft starter according to Claim 1 or 2,
the control means (5) exhibiting a hysteresis for switching on and/or switching off the bypass system (4) and the semiconductor power section (3).

4. Method for driving a motor (1) by means of a soft starter (2) having a semiconductor power section (3) for starting up and running down a motor, having a bypass system (4) for bridging the semiconductor power section (3) and also having a control means (5) for driving the semiconductor power section (3) and the bypass system (4),
- the current flowing through the bypass system (4) being measured when the bypass system (4) is switched on, and
- a first threshold value being prespecified to the control means (5), the measured current being compared with this first threshold value,
**characterized**
- **in that** the bypass system (4) which is already switched on is switched off and the semiconductor power section (3) is switched on during long-term operation of the motor (1) if the current exceeds the first threshold value, and
- **in that** the bypass system (4) is switched on again and the semiconductor power section (3) is switched off if the current falls below the first threshold value.

5. Method according to Claim 4,
a second threshold value being prespecified, and, when the semiconductor power section (3) is switched on, said semiconductor power section (3) being driven so as to limit the current to the second threshold value.

6. Method according to Claim 4 or 5,
the control means (5) being provided with a hysteresis for switching on and/or switching off the bypass system (4) and the semiconductor power section (3).

## Revendications

1. Démarreur ( 2 ) doux, pour la commande d'un moteur ( 1 ), comprenant une partie ( 3 ) de puissance à semiconducteur, pour le lancement et l'arrêt d'un moteur, comprenant un système ( 4 ) de dérivation, pour shunter la partie ( 3 ) de puissance à semiconducteur, ainsi qu'une commande ( 5 ), pour commander la partie ( 3 ) de puissance à semiconducteur et le système ( 4 ) de dérivation, dans lequel
- le démarreur ( 2 ) doux comporte un capteur ( 7 ) de mesure du courant,
- une première valeur de seuil peut être prescrite à la commande ( 5 ),
- une valeur du courant mesurée par le capteur ( 5 ) peut être envoyée à la commande ( 5 ),
**caractérisé**
- **en ce que** la commande ( 5 ) est telle qu'elle met hors circuit le système ( 4 ) de dérivation déjà mis en circuit, et qu'elle met en circuit la partie ( 3 ) de puissance à semiconducteur, lorsque la valeur du courant en fonctionnement permanent du moteur ( 1 ) dépasse la première valeur de seuil, et
- **en ce que** la commande ( 5 ) est telle qu'elle remet en circuit le système ( 4 ) de dérivation et met hors circuit la partie ( 3 ) de puissance à semiconducteur, lorsque la valeur du courant s'abaisse en-dessous de la première valeur de seuil.

2. Démarreur doux suivant la revendication 1,
dans lequel il peut être prescrit à la commande ( 5 ) une deuxième valeur de seuil et dans lequel la commande ( 5 ) est prévue pour, lors de la mise en circuit de la partie ( 3 ) de puissance à semiconducteur, commander la partie ( 3 ) de puissance à semiconducteur, de manière à produire une limitation du courant jusqu'à la deuxième valeur de seuil.

3. Démarreur doux suivant la revendication 1 ou 2,
dans lequel la commande ( 5 ) comporte une hystérésis, pour mettre en circuit et hors circuit le système ( 4 ) de dérivation et la partie ( 3 ) de puissance à semiconducteur.

4. Procédé de commande d'un moteur au moyen d'un démarreur ( 2 ) doux, comprenant une partie ( 3 ) de puissance à semiconducteur, pour le lancement et l'arrêt du moteur, comprenant un système ( 4 ) de dérivation, pour le shuntage de la partie ( 3 ) de puissance à semiconducteur, ainsi que comprenant une commande ( 5 ), pour commander la partie ( 3 ) de puissance à semiconducteur et le système ( 4 ) de dérivation, dans lequel
- on mesure le courant passant dans le système ( 4 ) de dérivation, lorsque le système ( 4 ) de dérivation est mis en circuit, et
- on prescrit à la commande ( 5 ) une première valeur de seuil, à laquelle on compare le courant mesuré,
**caractérisé**
- **en ce que** le système ( 4 ) de dérivation, déjà mis en circuit, est mis hors circuit et la partie ( 3 ) de puissance à semiconducteur est mise en circuit en fonctionnement permanent du moteur ( 1 ), lorsque le courant dépasse la première valeur de seuil, et
- **en ce que** le système ( 4 ) de dérivation est remis en circuit et la partie ( 3 ) de puissance à semiconducteur est remise hors circuit, lorsque le courant s'abaisse en-dessous de la première valeur de seuil.

5. Procédé suivant la revendication 4,
dans lequel on prescrit une deuxième valeur de seuil et dans lequel, lorsque la partie ( 3 ) de puissance à semiconducteur est mise en circuit, on la commande de manière à limiter le courant jusqu'à la deuxième valeur de seuil.

6. Procédé suivant la revendication 4 ou 5,
dans lequel on munit la commande ( 5 ) d'une hystérésis, pour mettre en circuit et hors circuit le système ( 4 ) de dérivation et la partie ( 3 ) de puissance à semiconducteur.
